# EUROPÄISCHE PATENTANMELDUNG

(11) **EP 1 184 402 A2**
(43) Veröffentlichungstag der Anmeldung: **06.03.2002**
(21) Anmeldenummer: 01119630.0
(22) Anmeldetag: 21.08.2001
(51) Int. Cl.: C08G 65/26, D06P 1/613

(54) **Alkoxylierte Phenolderivate**

(30) Priorität: 31.08.2000 DE 10042730
(71) Anmelder: BAYER AG, 51368 Leverkusen (DE)
(72) Erfinder: Meier, Helmut-Martin, Dr., 40883 Ratingen (DE); Knackmuss, Hans-Joachim, Prof. Dr., 71229 Leonberg (DE); Rieger, Paul-Gerhard, Dr., 70195 Stuttgart (DE)

(57) **Zusammenfassung**

Es wurden Verbindungen der Formel (I) gefunden 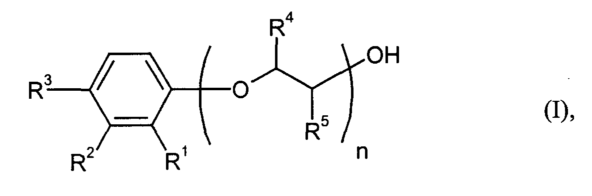 worin
- R¹, R² und R³: unabhängig voneinander für Wasserstoff, gegebenenfalls substituiertes Cyclohexyl oder gegebenenfalls substituiertes Phenyl stehen, wobei wenigstens einer der Reste R¹ bis R³ ungleich Wasserstoff ist,
- R⁴ und R⁵: unabhängig voneinander Methyl oder Wasserstoff bedeuten und
- n: eine Zahl von 21 bis 40 steht,
die bioabbaubare Dispergatoren mit guten Dispergiereigenschaften darstellen und zum Färben mit Dispersionsfarbstoffen eingesetzt werden.

## Beschreibung

Die Erfindung betrifft alkoxylierte Phenolderivate, ein Verfahren zu ihrer Herstellung sowie ihre Verwendung als Dispergiermittel im Färbeprozess von Textilien.

Im Allgemeinen sind Dispersionsfarbstoffe in Wasser unlösliche oder schwerlösliche Verbindungen, die nicht ohne Anwendung eines Dispergiermittels zum Färben von Textilien benutzt werden können. In der Literatur sind zahlreiche Dispergiermittel beschrieben, die dazu eingesetzt werden können. Besonders wirksam haben sich dabei die Ligninsulfonate und Naphthalinsulfonate erwiesen, wie z. B. dokumentiert in Chwala/Anger Handbuch der Textilhilfsmittel, 1977, S. 501 ff.

Auch alkoxylierte Phenole sowie deren Derivate sind bereits für diesen Zweck zum Einsatz gekommen.

In FR-A-2 472 627 werden beispielsweise ethoxylierte Phenolderivate mit bis zu 20 Ethylenoxid (EO) Einheiten explizit offenbart (Beispiele 1, 2, 3 und 5).

Gemäß GB-A-20 50 438 wird explizit ethoxyliertes p-Phenylphenol mit 12 EO-Einheiten offenbart (Beispiel 8).

Aus US-A-4 328 220 werden ebenfalls ethoxylierte Phenolderivate mit 8 EO-Einheiten (Verbindung B 30, Sp. 9, Z. 79) explizit offenbart.

All diese alkoxylierten Phenolderivate weisen aber noch unzureichende Dispergierwirkungen auf.

Aufgabe der vorliegenden Erfindung war es, gegenüber dem Stand der Technik verbesserte Dispergiermittel bereitzustellen. Als eine weitere Aufgabe sollten Dispergiermittel gefunden werden, die eine gute Bioabbaubarkeit besitzen, da die Dispergiermittel aus Färbeprozessen in der Abwasserflotte des Färbeprozesses verbleiben und in der Regel aufwendig entsorgt werden müssen.

Überraschenderweise wurden nun Verbindungen gefunden, die der Formel (I) entsprechen 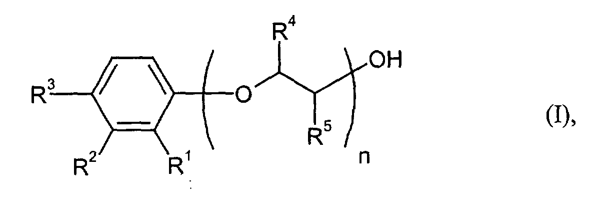 worin
- R¹, R² und R³: unabhängig voneinander für Wasserstoff, gegebenenfalls substituiertes Cyclohexyl oder gegebenenfalls substituiertes Phenyl stehen, wobei wenigstens einer der Reste R¹ bis R³ ungleich Wasserstoff ist,
- R⁴ und R⁵: unabhängig voneinander Methyl oder Wasserstoff bedeuten und
- n: eine Zahl von 21 bis 40 steht.

Als mögliche Substituenten des Cyclohexylrestes kommen beispielsweise C₁-C₄-Alkyl, C₁-C₄-Alkoxy, Halogen, CN oder Nitro in Frage. Bevorzugt ist der Cyclohexylrest jedoch unsubstituiert.

Als mögliche Substituenten des Phenylrestes kommen beispielsweise C₁-C₄-Alkyl, C₁-C₄-Alkoxy, Halogen, CN oder NO₂ in Frage. Bevorzugt ist der Phenylrest aber unsubstituiert.

Bevorzugt bedeutet n eine Zahl von 26 bis 35, besonders bevorzugt ist n = 29 bis 31.

Als besonders bevorzugte Phenolreste der Formel 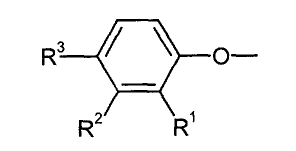 kommen beispielsweise solche in Frage, die sich von den entsprechenden Phenolen der Formel (II) ableiten, beispielsweise solche aus der Gruppe enthaltend o-Cyclohexylphenol, m-Cyclohexylphenol, p-Cyclohexylphenol, o-Phenylphenol, m-Phenylphenol und p-Phenylphenol. Besonders bevorzugt sind o- sowie p-Phenylphenol, insbesondere p-Phenylphenol.

Besonders bevorzugt steht R⁴ und R⁵ gemeinsam für Wasserstoff.

Ganz besonders bevorzugt ist die Verbindung der Formel 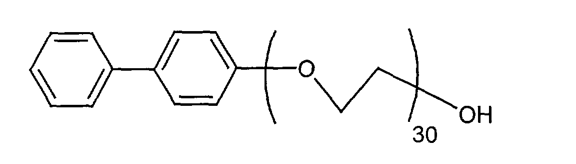 die ein sehr gutes Dispergiermittel darstellt und gleichzeitig leicht biologisch abbaubar ist.

Die Erfindung betrifft weiterhin ein Verfahren zur Herstellung der erfindungsgemäßen Verbindungen der Formel (I), das dadurch gekennzeichnet ist, dass man Phenole der Formel (II) 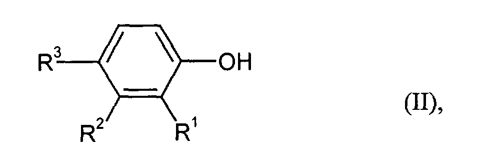 mit nmol-Äquivalenten eines Alkylenoxides der Formel (III) 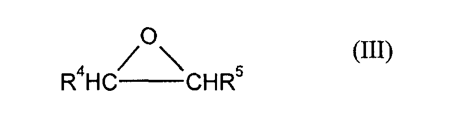 umsetzt.

Als Alkylenoxide der Formel (III) kommen vorzugsweise Ethylenoxid und/oder Propylenoxid, insbesondere Ethylenoxid in Frage.

Die Alkoxylierung erfolgt vorzugsweise in Gegenwart von Alkali- oder Erdalkalikatalysatoren, wobei diese bevorzugt in einer Menge von 0,1 bis 1 Gew.-%, bezogen auf das Phenolderivat der Formel (II), eingesetzt werden.

Als Verbindungen der Formel (II) ist besonders geeignet: o-Cyclohexylphenol, m-Cyclohexylphenol, p-Cyclohexylphenol, o-Phenylphenol, m-Phenylphenol, p-Phenylphenol.

Die Umsetzung der Phenolderivate der Formel (II) mit den Alkylenoxiden der Formel (III), insbesondere Ethylenoxid oder Propylenoxid, wird im Allgemeinen nach bekannten Verfahren durchgeführt und ist z.B. beschrieben in N. Schönfeldt, Grenzflächenaktive Ethylenoxid-Addukte, Stuttgart 1976.

Die Erfindung betrifft die Verwendung der erfindungsgemäßen Verbindungen als Dispergiermittel für Formulierungen, die pharmazeutisch oder agrochemische Wirkstoffe enthalten, sowie die entsprechenden Formulierungen.

Die Erfindung betrifft weiterhin die Verwendung der erfindungsgemäßen Verbindungen als Dispergiermittel beim Färben oder Bedrucken mit Dispersionsfarbstoffen sowie beim Färben von Textilien, insbesondere von hydrophoben Fasern.

Für das Färben von hydrophoben Fasern stehen mehrere bekannte Verfahren zur Verfügung, die z. B. in M. Peter, H.K. Rouette, Grundlagen der Textilveredlung, Frankfurt 1989, Kapitel 7.2.2. beschrieben sind. Besonders bevorzugt werden Dispergiermittel bei der Färbung von Polyesterfasern und deren Mischungen z.B. mit Wolle, Baumwolle, Polyamid und Polyacrylnitril eingesetzt.

Die Verbindungen der Formel (I) können vorteilhafterweise im Carrier-Färbeverfahren, im HT- Färbeverfahren sowie im Thermosol-Färbeverfahren eingesetzt werden. Im HT-Färbeverfahren wird im Allgemeinen das auf 50-60°C erwärmte Bad, das vorzugsweise 1-2 g/l Verbindung der Formel (II) enthält, mit Essigsäure auf pH 4,5-5 eingestellt und je nach Farbtiefe und Flottenverhältnis mit einem oder mehreren Dispersionsfarbstoffen versetzt. Die Flotte wird dann vorzugsweise in den Färbeapparat mit dem zu behandelnden Material gegeben. Dann wird vorzugsweise auf 130°C in 30 bis 60 Minuten unter Druck aufgeheizt und 60 bis 90 Minuten bei 130°C gefärbt. An die Färbung schließt sich üblicherweise eine reduktive Nachbehandlung mit 2 g/l Natriumhydrosulfit bei 75-85°C in 20 Minuten an. Unter Verwendung der erfindungsgemäßen Verbindung der Formel (I) erhält man ausgezeichnete Echtheiten. Es ist ebenfalls möglich, weitere übliche Hilfsmittel wie Dispergiermittel, Egalisiermittel, Carrier und Nachbehandlungsmittel in der Färbung anzuwenden.

Die erfindungsgemäßen Verbindungen der Formel (I) können in reiner Form oder in Form wässriger Lösungen, gegebenenfalls mit üblichen Lösungsmitteln wie Glykol oder Polyglykol angewandt werden. Eine bevorzugte Anwendungsform ist die wässrige Lösung von Verbindungen der Formel (I) in einer Konzentration von 10-90 Gew.-%, bevorzugt 70-30 Gew.-%, besonders bevorzugt 45-35 Gew.-%. Die Lösungen können beispielsweise durch Abmischen der erfindungsgemäßen Verbindungen mit Lösungsmitteln in geeigneten Rührapparaturen, beispielsweise bei Raumtemperatur oder unter Erwärmung hergestellt werden.

### Beispiele

Die Dispersionseigenschaften wurden mit Hilfe eines nachfolgend beschriebenen Dispergiermitteltests bestimmt.

Die biologische Abbaubarkeit wurde mit einem Test nach OECD 301 A ISO 7827 (DIN 7827) gemessen (Messung der Abnahme des organisch gebundenen Kohlenstoffes).

Nach diesen Richtlinien gilt ein organischer Stoff als "leicht biologisch abbaubar" nach einem beliebigen Test OECD 301 A bis F, wenn der Abbau >60 % beträgt.

### Dispergiermitteltest

Es wurden 5.0 g Resolin Blau BBLS (C.I.Disperse Blue 56) 10.0 g Natriumacetat (Trihydrat) mit entsalztemWasser auf 5000 ml aufgefüllt. Während des Verrührens wurde der pH-Wert mit Essigsäure auf 4,5 gestellt.

Aus dieser Farbstoff-Flotte wurden jeweils 100 ml zusammen mit 1 g/l des zu testenden Dispergiermittels eingesetzt. Die dabei erhaltene Flotte wurde anschließend auf dem Spectra Dye-Gerät (Becherfärbung) einem Färbeprogramm 120°C unterzogen. Danach wurde die Flotte über eine 5.5 cm Glas - Schlitzsieb - Nutsche (mit 3 Filterscheiben S&S - BF) abfiltriert.

Von der Flotte vor der Filtration und dem Filtrat wurden jeweils 1 ml entnommen und in 20 ml Aceton gelöst. Die in den acetonischen Lösungen enthaltenen Farbstoffmengen wurden im UV-VIS ausgewertet ( 1cm-Küvette, 610nm ). Als maßgebliche Größe gilt der Dispersionsfaktor (DF) = Extinktion Filtrat / Extinktion Ansatzflotte. Ein DF von 1 bedeutet ein sehr gutes Dispergiermittel, ein DF von 0 bedeutet ein unbrauchbares Dispergiermittel.

### Herstellungsbeispiel 1

170,2 g p-Phenylphenol (1 mol) werden bei 170°C im Autoklaven 10 Minuten im Hochvakuum entwässert und dann bei 2,5 bar, 170°C mit 1320 g Ethylenoxid (30 mol) in Gegenwart von 1,7 g Kaliumhydroxid innerhalb von 10 Stunden umgesetzt. Das Endprodukt wird als wässrige Lösung ohne weitere Aufarbeitung als Dispergiermittel eingesetzt. Die Eigenschaften hinsichtlich der Bioabbaubarkeit und des Dispergiervermögens sind in der Tabelle zusammengestellt.

### Beispiele 2 bis 4 (erfindungsgemäß)

Weitere erfindungsgemäße Verbindungen werden analog Beispiel 1 hergestellt. Dabei kann je nach Ausgangsprodukt die Reaktionstemperatur von 120°C bis 170°C und der Druck von 2,0 bis 4 bar variieren. Die Eigenschaften hinsichtlich der Bioabbaubarkeit und des Dispergiervermögens sind in der Tabelle zusammengestellt.

### Vergleichsbeispiele 1 und 2

Ethoxyliertes p-Phenylphenol (Beispiel 3 aus FR-A 2 472 627; 20 mol Äquivalent EO) beziehungsweise o-Phenylphenol (Beispiel 2 aus FR-A 2472627; 15 mol Äquivalent EO) werden hergestellt und den Beispielen 1 bzw. 2 gegenübergestellt. Überraschenderweise zeigten die erfindungsgemäßen Verbindungen einen deutlich höheren DF-Wert.

**Tabelle**

| | Phenolderivat der Formel (II) | Umsetzungsprodukt mit n mol-Äquivalent Ethylenoxid | Biologische Abbaubarkeit nach OECD 301 A | DF |
|---|---|---|---|---|
| Beispiel 1 | p-Phenylphenol | 30 | 94 % | 1,0 |
| Vergleich 1 | p-Phenylphenol | 20 | 98 % | 0,3 |
| Beispiel 2 | o-Phenylphenol | 26 | 67 % | 0,9 |
| Vergleich 2 | o-Phenylphenol | 15 | 67 % | 0,5 |
| Beispiel 3 | o-Cyclohexylphenol | 21 | 74 % | 0,9 |
| Beispiel 4 | p-Cyclohexylphenol | 21 | 68 % | 0,9 |

### Verwendungsbeispiel

In einem Trommel-Färbeapparat (Inhalt: 800 Liter) werden 90 kg Polyester-Kammzug mit einer Mischung aus 70 g Teratopgelb GWL 150 % (C.I. Konstitutions Nr. 10 338), 31 g Teratopblau BLF (C.I. Disperse Blue 62), 3 000 g Terasilrot R (C.I. Disperse Red 324) und 2 000 g Fantagenbordo 3BL bei 130°C gefärbt. Das Dispergiermittel wird in einer Menge von 1 g/l eingesetzt.

Als Dispergiermittel wurden die Verbindungen des Beispiels 3 bzw. des Beispiels 1 eingesetzt. Es wurden jeweils Färbungen mit excellenter Waschechtheit bei 50°C, Schweißechtheit und sehr guter alkalischer Fixierechtheit bei 180°C erhalten.

## Patentansprüche

1. Verbindungen der Formel (I) 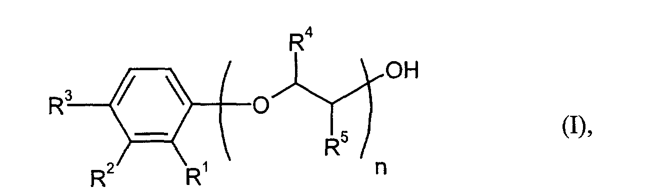 worin
R¹, R² und R³ unabhängig voneinander für Wasserstoff, gegebenenfalls substituiertes Cyclohexyl oder gegebenenfalls substituiertes Phenyl stehen, wobei wenigstens einer der Reste R¹ bis R³ ungleich Wasserstoff ist,
R⁴ und R⁵ unabhängig voneinander Methyl oder Wasserstoff bedeuten und
n eine Zahl von 21 bis 40 steht.

2. Verbindungen nach Anspruch 1, **dadurch gekennzeichnet, dass** n für eine Zahl von 26 bis 35 steht.

3. Verbindungen nach Anspruch 1, **dadurch gekennzeichnet, dass** R³ für Phenyl steht.

4. Verbindungen nach Anspruch 1, **dadurch gekennzeichnet, dass** wenigstens einer der Reste R¹ bis R³ für Cyclohexyl steht und n für eine Zahl von 21 bis 40 steht.

5. Verfahren zur Herstellung von Verbindungen gemäß Anspruch 1, **dadurch gekennzeichnet, dass** man Phenole der Formel (II) 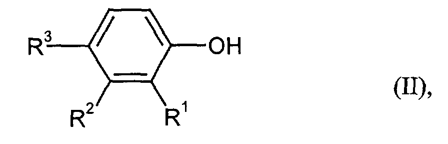 mit nmol-Äquivalenten eines Alkylenoxides der Formel (III) 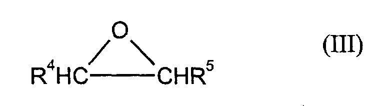 umsetzt.

6. Verwendung der Verbindungen gemäß Anspruch 1 als Dispergiermittel beim Färben oder Bedrucken mit Dispersionsfarbstoffen.

7. Verwendung der Verbindungen gemäß Anspruch 1 als Dispergiermittel beim Färben von Textilien.

8. Verwendung der Verbindungen gemäß Anspruch 1 als Dispergiermittel beim Färben von hydrophoben Fasern.

9. Verwendung der Verbindungen gemäß Anspruch 1 als Dispergiermittel für Formulierungen enthaltend pharmazeutische oder agrochemische Wirkstoffe.

10. Formulierungen, die pharmazeutisch oder agrochemische Wirkstoffe sowie Verbindungen gemäß Anspruch 1 enthalten.
